**Europäisches Patentamt**

**European Patent Office**

**Office européen des brevets**

(19)

(11) Veröffentlichungsnummer : **0 381 678 B1**

(12) **EUROPÄISCHE PATENTSCHRIFT**

(45) Veröffentlichungstag der Patentschrift :
**17.06.92 Patentblatt 92/25**

(51) Int. Cl.⁵ : **F16B 13/00, C23C 4/10**

(21) Anmeldenummer : **88907048.8**

(22) Anmeldetag : **20.07.88**

(86) Internationale Anmeldenummer :
**PCT/EP88/00656**

(87) Internationale Veröffentlichungsnummer :
**WO 89/00648 26.01.89 Gazette 89/03**

(54) **HINTERSCHNITT-BOHRDÜBEL.**

(30) Priorität : **22.07.87 DE 3724280**

(43) Veröffentlichungstag der Anmeldung :
**16.08.90 Patentblatt 90/33**

(45) Bekanntmachung des Hinweises auf die
Patenterteilung :
**17.06.92 Patentblatt 92/25**

(84) Benannte Vertragsstaaten :
**AT BE CH DE FR GB IT LI LU NL SE**

(56) Entgegenhaltungen :
**EP-A- 0 172 547
EP-A- 0 224 827
WO-A-82/04461
WO-A-84/00793
DE-B- 1 221 056
FR-A- 2 185 696
GB-A- 2 109 886**

(73) Patentinhaber : **M. Meisinger KG
W-8890 Aichach (DE)**

(72) Erfinder : **BERGER, Xaver
Theodor Heuss Str. 38
W-8890 Aichach (DE)**
Erfinder : **HOFFMANN, Stefan
St.-Helene Weg 4
W-8890 Aichach (DE)**
Erfinder : **SCHÜLKE, Rudolf
Im Kessel 5
W-8890 Aichach (DE)**

(74) Vertreter : **Tiedtke, Harro, Dipl.-Ing. et al
Patentanwaltsbüro Tiedtke-Bühling-Kinne-
Grupe-Pellmann-Grams-Struif-Winter-Roth
Bavariaring 4
W-8000 München 2 (DE)**

## Beschreibung

Die Erfindung betrifft einen Hinterschnitt-Bohrdübel gemäß dem Oberbegriff des Patentanspruchs 1.

Ein Hinterschnitt-Bohrdübel, wie er beispielsweise unter der Bezeichnung "selbsthinterschneidender Schwerlastanker" von der Firma Upat, Emmendingen, angeboten wird, dient zur Befestigung von Bauelementen an Betonbauteilen und weist eine in ihrem vorderen Bereich geschlitzte Bohrhülse auf, die zur Befestigung des Bohrdübels in ein im Betonbauteil vorgefertiges, im wesentlichen zylinderförmiges Bohrloch eingesetzt wird. Nachdem die Bohrhülse um ein gewisses Maß in das Bohrloch eingesetzt ist, gerät sie mit einem am Bohrlochgrund angeordneten Konus in Anlage, der einstückig mit einer die Bohrhülse durchdringenden Gewindestange verbunden ist. Bei einem weiteren Einführen der Bohrhülse in das Bohrloch und bei deren Drehung wird ein vorderer geschlitzter Bereich der Bohrhülse durch den Konus aufgeweitet und Hartmetallspitzen, die am vorderen Ende der Bohrhülse einstückig mit dieser ausgebildet sind und axial von der Bohrhülse vorstehen, bilden am Bohrlochgrund eine konische Hinterschneidung aus, in der die aufgeweitete bzw. aufgespreizte Bohrhülse sicher gehalten ist. Von außen auf die Gewindestange einwirkende Kräfte können somit über den Konus und die aufgeweitete Bohrhülse in das Betonbauteil abgeleitet werden. Um die Reibung der Mantelfläche des vorderen geschlitzten Bereiches der Bohrhülse während der Ausbildung der konischen Hinterschneidung sowie die erforderliche Vorschubkraft für die Bohrhülse zu verringern, ist an der geschlitzten Mantelfläche der Bohrhülse eine Hinterdrehung ausgebildet, die gewährleistet, daß die geschlitzte Mantelfläche ständig von der Wandung des Bohrlochs beabstandet ist. Allerdings ist infolge der Hinterdrehung die Kontaktfläche zwischen der Bohrhülse und der Wandung des Bohrlochs wesentlich verkleinert, so daß die übertragbare Kraft verringert ist und hohe örtliche Spannungen auftreten können.

Sowohl die Ausbildung der Hartmetallspitzen als auch der Hinterdrehung sind herstellungstechnisch zeitaufwendige Maßnahmen, die die Herstellungskosten für eine Bohrdübel wesentlich erhöhen.

Aus dem Dokument EP 0 172 547 Al ist ein Hinterschnitt-Bohrdübel gemäß dem Oberbegriff des Patentanspruchs 1 bekannt. Dieser Hinterschnitt-Bohrdübel weist eine Bohrhülse auf, die relativ zu einem in einem vorgefertigten Bohrloch angeordneten Konus verschiebbar bzw. auf diesen aufschiebbar ist, wodurch ein geschlitzter Endabschnitt der Bohrhülse aufgespreizt wird. Um beim Aufspreizen des geschlitzten Endabschnittes der Bohrhülse am Bohrlochgrund eine Hinterschneidung auszubilden, ist an der dem Konus zugewandten axialen Endfläche der Bohrhülse ein Schneidring angeordnet und beispielsweise mittels einer Lötverbindung an dieser befestigt. Die Ausbildung eines derartigen Schneidringes und insbesondere dessen Befestigung an der Bohrhülse erfordert allerdings einen herstellungstechnischen Mehraufwand.

Der Erfindung liegt die Aufgabe zugrunde, den gattungsgemäßen Hinterschnitt-Bohrdübel derart weiterzubilden, daß die Ausbildung einer konischen Hinterschneidung mittels einer in einfacher Weise herstellbaren Bohrhülse erreicht werden kann.

Diese Aufgabe wird erfindungsgemäß durch die Merkmale im kennzeichnenden Teil des Patentanspruchs 1 gelöst.

Durch die Anbringung einer Beschichtung aus harten Partikeln in dem geschlitzten Endabschnitt der Bohrhülse entsteht eine aufgerauhte, sehr harte Oberfläche, die als Schneide zur Ausbildung der Hinterschneidung am Bohrlochgrund dient. Eine zusätzliche Anordnung von Hartmetallspitzen zum Schneiden ist somit nicht notwendig. Da des weiteren die Mantelfläche in Umfangsrichtung nur abschnittsweise mit der Beschichtung versehen ist, dient sie ebenfalls dem Schneiden bzw. der Ausbildung der Hinterschneidung, wodurch die Reibung zwischen der Mantelfläche der Bohrhülse und der Bohrlochwandung verringert ist. Eine beim bekannten Bohrdübel ausgebildete Hinterdrehung ist nicht notwendig, so daß die Hülse über eine große Kontaktfläche an der Wandung des Bohrlochs anliegt. Damit ist eine gleichmäßige Kraftübertragung bei nur relativ geringen Spannungen erzielbar. Des weiteren weist die Bohrhülse einen einfachen Aufbau auf und kann in einfacher Weise hergestellt werden.

Vorteilhafte Weiterbildungen des Hinterschnitt-Bohrdübels ergeben sich aus den Unteransprüchen.

Zwar ist aus dem Dokument DE-AS 1 221 056 bereits ein Dübel bekannt, bei dem der Konus oder die Spreizhülse zum Herstellen des Bohrlochs an der Stirnfläche mit einem Schleifkörper versehen ist. Der Spreizkörper wird im befestigten Zustand des Dübels von innen gegen die Bohrlochwand gepreßt. Soweit ein mit harten Partikeln beschichteter Schleifkörper angesprochen ist, befinden sich die harten Partikel lediglich an der axialen Endfläche einer Hülse, die zur Ausbildung eines Bohrloches dient.

Weitere Ziele, Anwendungen und Vorteile der Erfindung werden aus der folgenden ausführlichen Beschreibung eines bevorzugten Ausführungsbeispiels unter Bezugnahme auf die beigefügten Zeichnungen vollständig ersichtlich.

Figur 1 zeigt die einzelnen Bauteile eines Hinterschnitt-Bohrdübels in einer Explosions-Schnitt-Darstellung,

Figuren 2a, 2b und 2c zeigen die einzelnen Phasen der Befestigung eines Bauteils mit tels eines Hinterschnitt-Bohrdübels,

Figur 3 zeigt eine Bohrhülse in perspektivischer Darstellung und

Figuren 4a, 4b und 4c zeigen weitere Ausführungsbeispiele der Bohrhülse.

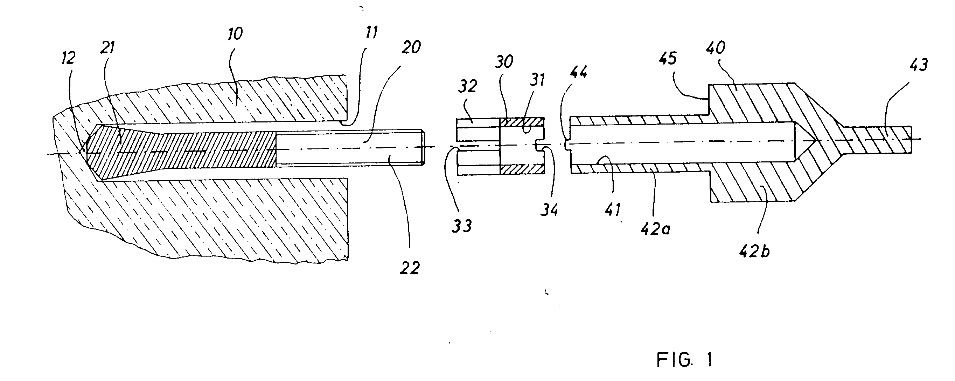

Zur Anbringung eines Hinterschnitt-Bohrdübels ist in einem Bauteil, üblicherweise einem Betonbauteil 10, ein zylindrisches Bohrloch 11 vorgefertigt. Ein Gewindebolzen 20, der einen wesentlich geringeren Durchmesser als das Bohrloch 11 besitzt, weist an seinem einen Ende einen Gewindeabschnitt 22 und an seinem anderen Ende eine Aufweitung in Form eines konusförmigen Kopfes 21 auf. Der Gewindebolzen 20 wird derart in das Bohrloch 11 eingesetzt, daß sein konusförmiger Kopf 21 am Bohrlochgrund 12 angeordnet ist und der Gewindeabschnitt 22 aus dem Bohrloch 11 hervorsteht. Eine derartige Anordnung ist in Figur 1 dargestellt.

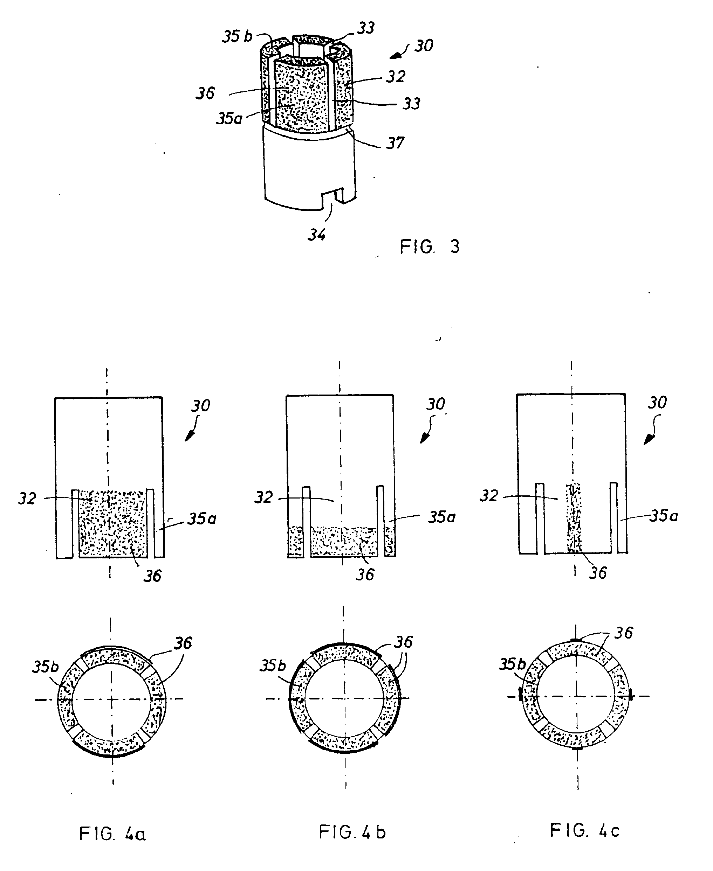

Eine Bohrhülse 30, wie sie in Figur 1 und insbesondere in Figur 3 dargestellt ist, weist eine Mittelbohrung 31 auf, deren Innendurchmesser gleich dem oder etwas größer als der Außendurchmesser des Gewindebolzens 20 ist, wodurch die Bohrhülse 30 leichtgängig entlang des Gewindebolzens 20 verschiebbar ist. Der Außendurchmesser der Bohrhülse 30 entspricht im wesentlichen dem Innendurchmesser des Bohrlochs 11, so daß die Bohrhülse 30 in das Bohrloch 11 einsetzbar ist.

Die Bohrhülse 30 weist an einem Ende einen geschlitzten Endabschnitt 32 auf, in dem mehrere Schlitze 33 ausgebildet sind, die in Axialrichtung der Bohrhülse 30 von deren einem Ende bis etwa zu deren Mitte verlaufen. Gemäß den Zeichnungen weist die Bohrhülse 30 vier Schlitze 33 auf, es können aber aber auch zwei, drei oder mehr Schlitze 33 vorgesehen sein.

Der geschlitzte Endabschnitt 32 ist an seiner Mantelfläche 35a und seiner axialen Endfläche 35b mit einer Beschichtung 36 aus harten Partikeln versehen. Die Partikel der Beschichtung 36 können aus Chrom, Vanadium oder vorzugsweise aus Hartchrom oder Wolframcarbid bestehen. Die Beschichtung 36 ist etwa 0,3 mm dick und wird auf die Bohrhülse 30, die aus Stahl, vorzugsweise aus Stahl St 37 besteht, mittels eines bekannten Flammspritzverfahrens aufgebracht. Es sind aber auch andere Verfahren denkbar, die einen sicheren Sitz der Partikel auf der Bohrhülse 30 gewährleisten.

Zur Anbringung des Hinterschnitt-Bohrdübels wird die Bohrhülse 30 auf den Gewindebolzen 20 aufgeschoben, wobei der geschlitzte Endabschnitt 32, wie in Figur 1 dargestellt ist, dem konusförmigen Kopf 21 des Gewindebolzens 20 bzw. dem Bohrlochgrund 12 zugewandt ist. Zur Verbindung mit einem Kopplungsteil 40 ist an dem dem Bohrlochgrund 12 abgewandten Ende der Bohrhülse 30 eine Ausnehmung 34 ausgebildet, die mit einem an einem der Bohrhülse 30 zugewandten, vorderen Ende des Kopplungsteils 40 ausgebildeten Vorsprung 44 derart in Eingriff treten kann, daß eine Drehbewegung vom Kopplungsteil 40 auf die Bohrhülse 30 übertragbar ist, wohingegen eine axial gerichtete Zugkraft nicht übertragen werden kann. Der Eingriff zwischen der Ausnehmung 34 und dem Vorsprung 44 ist dementsprechend mittels einer axial gerichteten Zugkraft jederzeit lösbar.

Das Kopplungsteil 40 weist an seinem vorderen Ende eine Bohrung 41 auf, deren Innendurchmesser dem Innendurchmesser der Bohrhülse 30 im wesentlichen entspricht. Dementsprechend ist der Gewindeabschnitt 22 des Gewindebolzens 20 in die Bohrung 41 einsetzbar und innerhalb dieser leichtgängig verschiebbar. Der Außendurchmesser des Kopplungsteils 40 in dessen vorderem Abschnitt 42a entspricht im wesentlichen dem Außendurchmesser der Bohrhülse 30, so daß das Kopplungsteil 40 mit seinem vorderen Abschnitt 42a in das Bohrloch 11 einsetzbar ist. In etwa der Mitte des Kopplungsteils 40 schließt an den vorderen Abschnitt 42a ein Abschnitt vergrößerten Durchmessers 42b an, so daß zwischen den beiden Abschnitten 42a und 42b eine Schulter 45 ausgebildet ist. Der Abschnitt vergrößerten Durchmessers 42b geht in ein Anschlußteil 43 über, mittels dessen das Kopplungsteil 40 mit einer Bohrmaschine oder einer ähnlichen Antriebsquelle koppelbar ist.

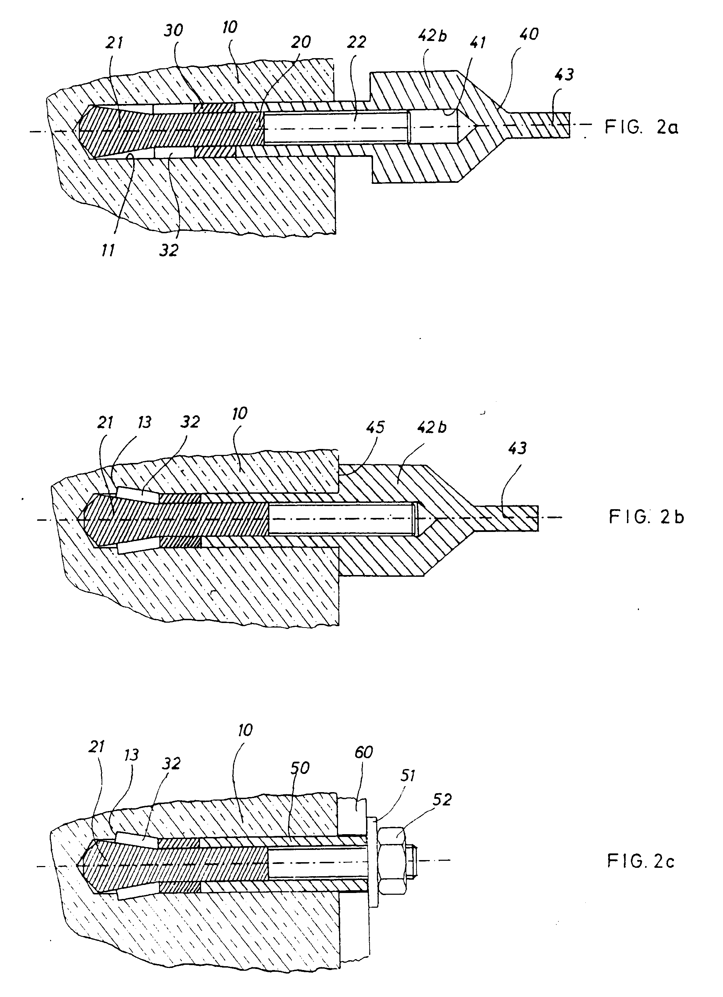

Im folgenden soll anhand der Figuren 2a, 2b und 2c die Anbringung eines zu befestigenden Bauteils 60 an einem Betonbauteil 10 in den einzelnen Phasen erläutert werden: Die Bohrhülse 30 wird derart auf den Gewindebolzen 20 aufgeschoben, daß ihr geschlitzter Endabschnitt 32 dem konusförmigen Kopf 21 des Gewindebolzens 20 zugewandt ist. Anschließend wird der Gewindebolzen 20 mit seinem Gewindeabschnitt 22 in die Bohrung 41 des Kopplungsteils 40 eingeschoben, wobei der Vorsprung 44 am vorderen Ende des Kopplungsteils 40 mit der Ausnehmung 34 der Bohrhülse 30 in Eingriff tritt. Das Kopplungsteil 40 ist dabei in nicht dargestellter Weise über das Anschlußteil 43 mit einer Bohrmaschine oder ähnlichem verbunden. Die in oben beschriebener Weise zusammengesetzte Anordnung wird in das Bohrloch 11, das in dem Betonbauteil 10 vorgefertigt ist, so weit eingesetzt, daß der konusförmige Kopf 21 des Gewindebolzens 20 am Bohrlochgrund anliegt. Dieser Zustand ist in Figur 2a dargestellt. Bei Betätigung der nicht dargestellten Bohrmaschine wird das Kopplungsteil 40 und über den Eingriff des Vorsprungs 44 in die Ausnehmung 34 auch die Bohrhülse 30 in eine Drehung bezüglich des Bohrlochs 11 versetzt. In Abhängigkeit von den auftetenden Reibungskräften dreht sich der Gewindebolzen 20 mit der Bohrhülse 30 mit oder nicht, was für die Funktion des Hinterschnitt-Bohrdübels allerdings keine Auswirkung hat. Wenn auf das Kopplungsteil 40 eine axiale, in Richtung Bohrlochgrund 12 gerichtete Druckkraft manuell oder maschinell aufgebracht wird, so wird die Bohrhülse 30 mit ihrem geschlitzten Endabschnitt 32 gegen den konusförmigen Kopf 21 gedrückt und auf diesen aufgeschoben. Der konusförmige Kopf 21 bewirkt dabei eine Aufspreizung des geschlitzten Endabschnitts 32, wodurch dessen Außenflächen, d.h. die axiale Endfläche 35b und die Mantelfläche 35a gegen die Wandung des Bohrlochs 11 gedrückt werden. Die an den Außenflächen 35a und 35b aufgebrachte Beschichtung 36 aus harten Partikeln bewirkt ein Aufbohren bzw. ein Aufschleifen der Wandung des Bohrlochs 11. Das Kopplungsteil 40 wird so lange in Richtung des Bohrlochgrundes 12 verschoben, bis die Schulter 45 an der Außenwand des Betonbauteils 10 zur Anlage kommt und eine weitere Verschiebung nicht möglich ist. In diesem Zustand ist der geschlitzte Endabschnitt 32 der Bohrhülse 30 so weit aufgespreizt, daß die Beschichtung 36 aus harten Partikeln eine Hinterschneidung 13 in der Wandung des Bohrlochs 11 ausgebildet hat, wie es in Figur 2b dargestellt ist.

Anschließend wird das Kopplungsteil 40 aus dem Bohrloch 11 herausgezogen, wobei die Verbindung zwischen der Ausnehmung 34 und dem Vorsprung 44 gelöst wird. Um ein Lösen der Bohrhülse 30 zu verhindern, wird eine Distanzhülse 50 auf den Gewindebolzen 20 so weit aufgeschoben, bis diese mit der Bohrhülse 30 in Anlage kommt. In einem zu befestigenden Bauteil 60 ist eine Bohrung ausgebildet, die von dem Gewindebolzen 20 und der Distanzhülse 50 durchdrungen wird. Der Gewindebolzen 20 steht dabei über die Außenfläche des zu befestigenden Bauteils 60 hervor, während die Distanzhülse 50 mit dieser abschließt. Mittels einer Unterlegscheibe 51 und einer Mutter 52, die von der Außenseite auf den Gewindeabschnitt 22 des Gewindebolzens 20 aufgeschraubt wird, wird das Bauteil 60 am Betonbauteil 10 befestigt.

Um beim Aufspreizen des geschlitzten Endabschnitts 32 der Bohrhülse 30 einen vorbestimmten Drehpunkt für die aufzuspreizenden Abschnitte zu erhalten, ist es wünschenswert, in der Bohrhülse 30 eine umlaufende Nut 37 auszubilden, wie in Figur 3 dargestellt ist. Aufgrund der Querschnittsschwächung infolge der Nut 37 drehen sich die einzelnen Abschnitte des geschlitzten Endabschnitts 32 bei dessen Aufspreizung um einen gewünschten Drehpunkt, der im Bereich der Nut 37 angeordnet ist.

In Zusammenhang mit Figur 3 wurde beschrieben, daß sowohl die Mantelfläche 35a als auch die axiale Endfläche 35b des geschlitzten Endbereiches 32 der Bohrhülse 30 vollständig mit einer Beschichtung 36 versehen sind. Es ist in Abwandlung davon allerdings auch möglich, diese Flächen nur bereichsweise mit der Beschichtung zu versehen. Einige Beispiele dafür sind in den Figuren 4a, 4b und 4c dargestellt.

In Figur 4a ist die Mantelfläche 35a des geschlitzten Endabschnitts 32 der Bohrhülse 30 ebenfalls über die gesamte Höhe des geschlitzten Endabschnitts 32, in Umfangsrichtung aber nur bereichsweise mit der Beschichtung 36 versehen. In Figur 4a ist gezeigt, daß der Umfang der Bohrhülse 30 an zwei Stellen mit der Beschichtung 36 versehen ist. Es ist aber auch möglich, über den Umfang nur eine oder eine Vielzahl von Stellen mit der Beschichtung 36 zu versehen.

Gemäß Figur 4b ist die Mantelfläche 35b über den gesamten Umfang mit der Beschichtung 36 versehen, während die Beschichtung 36 in Axialrichtung der Bohrhülse 30 von deren vorderem Ende nur bis etwa zur halben Höhe des geschlitzten Endabschnitts angeordnet ist. Figur 4c zeigt sogenannte Stege aus der Beschichtung 36, die in Axialrichtung der Bohrhülse 30 verlaufen und in Umfangsrichtung nur eine sehr geringe Abmessung aufweisen.

Auch die axiale Endfläche 35b der Bohrhülse 30 kann sowohl in Umfangs- als auch in Radialrichtung nur bereichsweise mit der Beschichtung 36 versehen sein, was nicht eingehender erläutert zu werden braucht.

## Patentansprüche

1. Hinterschnitt-Bohrdübel, mit einem Gewindebolzen (20,22),
einem Konus (21),der in ein vorgefertigtes Bohrloch (11) einsetzbar ist, und
einer Bohrhülse (30), die relativ zu dem Konus derart verschiebbar ist, daß ein in Axialrichtung geschlitzter Endabschnitt (32) der Bohrhülse (30) mittels des Konus (21) aufspreizbar ist,
wobei die Bohrhülse (30) mit Schneidelementen (36) versehen ist, mittels derer am Bohrlochgrund eine Konusförmige Hinterschneidung (13) ausbildbar ist,
dadurch gekennzeichnet, daß der konus (21) am Gewindebolzen (20, 22) an dessen vorderem Ende in Form einer konusförmigen Aufweitung ausgebildet ist und die Schneidelemente von einer Beschichtung (36) aus harten Partikeln gebildet sind, mit der die Mantelfläche (35a) und die axiale Endfläche (35b) des geschlitsten Endabschnittes (32) der Bohrhülse (30) versehen sind, wobei die Mantelfläche (35a) in Umfangsrichtung nur abschnittsweise mit der Beschichtung (36) versehen ist.

2. Hinterschnitt-Bohrdübel nach Anspruch 1, dadurch gekennzeichnet, daß die Beschichtung (36) mittels eines Flammspritzverfahrens aufgebracht ist.

3. Hinterschnitt-Bohrdübel nach Anspruch 1 oder 2, dadurch gekennzeichhet., daß die Beschichtung (36) etwa 0,3 mm dick ist.

4. Hinterschnitt-Bohrdübel nach einem der Ansprüche 1 bis 3, dadurch gekennzeichnet, daß die Beschichtung (36) aus Hartchrom-Partikeln besteht.

5. Hinterschnitt-Bohrdübel nach einem der Ansprüche 1 bis 3, dadurch gekennzeichnet, daß die Beschichtung (36) aus Wolframcarbid-Partikeln besteht.

6. Hinterschnitt-Bohrdübel nach einem der Ansprüche 1 bis 3, dadurch gekennzeichnet, daß die Beschichtung (36) aus Vanadium-Partikeln besteht.

7. Hinterschnitt-Bohrdübel nach einem der Ansprüche 1 bis 6, dadurch gekennzeichnet, daß die Mantelfläche (35a) des geschlitzten Endabschnittes (32) der Bohrhülse (30) in Axialrichtung nur abschnittsweise mit der Beschichtung (36) versehen ist.

8. Hinterschnitt-Bohrdübel nach einem der Ansprüche 1 bis 7, dadurch gekennzeichnet, daß die gesamte axiale Endfläche (35b) der Bohrhülse (30) mit der Beschichtung (36) versehen ist.

9. Hinterschnitt-Bohrdübel nach einem der Ansprüche 1 bis 7, dadurch gekennzeichnet, daß die axiale Endfläche (35b) der Bohrhülse (30) in Umfangs- und/oder Radialrichtung nur abschnittsweise mit der Beschichtung (36) versehen ist.

10. Hinterschnitt-Bohrdübel nach einem der Ansprüche 1 bis 9, dadurch gekennzeichnet, daß die Bohrhülse (30) aus Stahl besteht.

## Claims

1. Undercutting drilling plug, having a threaded stud (20, 22),
a taper (21) which can be inserted in a predrilled hole (11), and
a drilling sleeve (30) which can be displaced relative to the taper in such a way that an end section (32) of the drilling sleeve (30), which end section (32) is slit in the axial direction, can be expanded by means of the taper (21),
the drilling sleeve (30) being provided with cutting elements (36), by means of which a tapered undercut (13) can be formed at the bottom of the drilled hole,
characterised in that the taper (21) on the threaded stud (20, 22) is designed at its front end in the form of a tapered widened portion, and the cutting elements are formed by a coating (36) of hard particles with which the circumferential surface (35a) and the axial end face (35b) of the slit end section (32) of the drilling sleeve (30) are provided, the circumferential surface (35a) being provided with the coating (36) only in certain areas in the peripheral direction.

2. Undercutting drilling plug according to Claim 1, characterised in that the coating (36) is applied by means of a flame-spraying method.

3. Undercutting drilling plug according to Claim 1 or 2, characterised in that the coating (36) is about 0.3 mm thick.

4. Undercutting drilling plug according to one of Claims 1 to 3, characterised in that the coating (36) consists of hard chromium particles.

5. Undercutting drilling plug according to one of Claims 1 to 3, characterised in that the coating (36) consists of tungsten carbide particles.

6. Undercutting drilling plug according to one of Claims 1 to 3, characterised in that the coating (36) consists of vanadium particles.

7. Undercutting drilling plug according to one of Claims 1 to 6, characterised in that the circumferential surface (35a) of the slit end section (32) of the drilling sleeve (30) is provided with the coating (36) only in certain areas in the axial direction.

8. Undercutting drilling plug according to one of Claims 1 to 7, characterised in that the entire axial end face (35b) of the drilling sleeve (30) is provided with the coating (36).

9. Undercutting drilling plug according to one of Claims 1 to 7, characterised in that the axial end face (35b) of the drilling sleeve (30) is provided with the coating (36) only in certain areas in the peripheral and/or radial direction.

10. Undercutting drilling plug according to one of Claims 1 to 9, characterised in that the drilling sleeve (30) is made of steel.

## Revendications

1. Cheville à contre-dépouille, avec une tige filetée (20,22),
un cône (21) qui peut être introduit dans un trou (11) dejà percé, et
une douille de perçage (30), qui peut être déplacée par rapport au cône, de telle façon qu'une section d'extrémité (32) fendue dans la direction axiale, de la douille (30) puisse être écartée au moyen du cône (21), la douille (30) étant pourvue d'éléments de coupe (36), au moyen desquels une contre-dépouille conique (13) peut être réalisée au fond du trou de perçage,

caractérisée en ce que le cône (21) situé sur la tige filetée (20,22) est réalisé, à son extrémité avant, sous la forme d'un élargissement conique et les éléments de coupe étant formés par un revêtement (36) en particules dures, dont sont pourvues l'enveloppe (35a) et la surface d'extrémité axiale (35b) de la section d'extrémité fendue (32) de la douille (30), l'enveloppe (35a) n'étant pourvue, en direction périphérique, du revêtement (36) que par sections.

2. Cheville à contre-dépouille selon la revendication 1, caractérisée en ce que le revêtement (36) est appliqué au moyen d'un procédé de pulvérisation à la flamme.

3. Cheville à contre-dépouille selon la revendication 1 ou 2, caractérisée en ce que le revêtement (36) est d'une épaisseur d'à peu près 0,3 mm.

4. Cheville à contre-dépouille selon l'une des revendications 1 à 3, caractérisée en ce que le revêtement (36) est composé en particules de chrome dur.

5. Cheville à contre-dépouille selon l'une des revendications 1 à 3, caractérisée en ce que le revêtement (36) est composé en particules de carbure de tungstène.

6. Cheville à contre-dépouille selon l'une des revendications 1 à 3, caractérisée en ce que le revêtement (36) est composé en particules de vanadium.

7. Cheville à contre-dépouille selon l'une des revendications 1 à 6, caractérisée en ce que l'enveloppe (35a) de la section d'extrémité fendue (32) de la douille (30) est pourvue, en direction axiale, du revêtement (36) que par sections.

8. Cheville à contre-dépouille selon l'une des revendications 1 à 7, caractérisée en ce que la totalité de la surface d'extrémité axiale (35b) de la douille (30) est pourvue du revêtement (36).

9. Cheville à contre-dépouille selon l'une des revendications 1 à 7, caractérisée en ce que la surface d'extrémité axiale (35b) de la douille (30) n'est pourvue, que par sections, du revêtement (36), en direction périphérique et/ou radiale.

10. Cheville à contre-dépouille selon l'une des revendications 1 à 9, caractérisée en ce que la douille (30) est en acier.

FIG. 1

FIG. 2a

FIG. 2b

FIG. 2c

FIG. 3

FIG. 4a          FIG. 4b          FIG. 4c